# EUROPEAN PATENT SPECIFICATION

(11) **EP 1 985 838 B1**
(45) Date of publication and mention of the grant of the patent: **10.12.2008**
(21) Application number: 07106808.4
(22) Date of filing: 24.04.2007
(51) Int. Cl.: F02M 37/22, B01D 27/08

(54) **Fuel Filter Element End Cap**
Abschlusskappe für ein Kraftstofffilterelement
Bouchon d'extrémité d'élément de filtre à carburant

(43) Date of publication of application: 29.10.2008
(73) Proprietor: Delphi Technologies, Inc., Troy, MI 48007 (US)
(72) Inventor: Marx, Patrice, 54650, Saulnes (FR)
(74) Representative: Robert, Vincent

(56) References cited:
- DE-A1- 19 809 989
- DE-A1-6102004 021 78
- DE-U1-2202005 008 09
- US-A- 5 698 093

## Description

The present invention relates to a fuel filter element end cap, particularly, but not exclusively, a fuel filter element end cap for use on either end of a fuel filter element of an automobile fuel supply system.

Fuel filters are commonly used in fuel supply systems in order to remove contaminants prior to the fuel passing through other components of the fuel supply system and engine. Fuel filters typically have a fuel filter element connected to a fuel filter housing by connection portions which pass through corresponding apertures in end caps of the fuel filter element. German Patent publication No. DE 102004021786 describes a fuel filter assembly having a soft sealing ring which swells upon contact with fuel in order to seal around the connection portion of the fuel filter housing.

In most systems, it is desirable to periodically remove the fuel filter element from the fuel filter housing for replacement or servicing. A problem with this is that the action of removing the fuel filter element from the housing means that contaminating particles may enter the fuel filter through the open aperture. The presence of such contaminants in the fuel filter element can be problematic once the fuel filter is reassembled since upon reconnection the contaminant will reside on the otherwise filtered side of the fuel filter and hence may pass into the other components of the fuel supply system with the possible result of causing damage to the system.

According to the present invention, there is provided a fuel filter element with an end cap, the end cap comprising:-
an aperture for connecting the fuel filter to a connecting portion of a fuel filter housing; and
a closure actuable between a closed position, in which the aperture is substantially blocked, and an open position, in which the aperture is substantially open, wherein the closure is actuable from the closed position to the open position by insertion of the connection portion into the aperture and from the open position to the closed position by removal of the connecting portion from the aperture.

Further features and advantages of the present invention will become apparent from the accompanying claims.

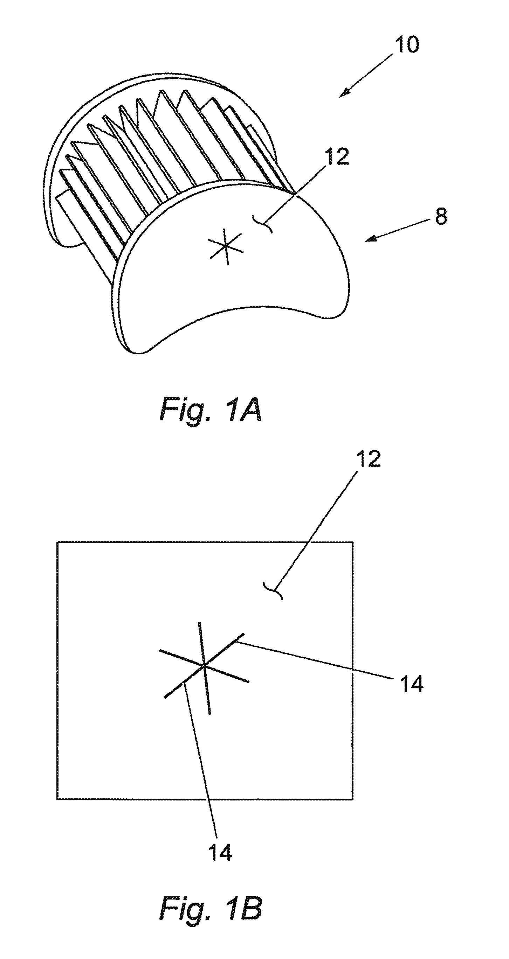

Embodiments of the present invention will now be described, by way of example only, with reference to the accompanying drawings, in which:-
Fig. 1A is a perspective view of a fuel filter end cap, according to the present invention, installed on either end of a fuel filter element; and
Fig 1B is a more detailed close up view of the diaphragm of the fuel filter end cap of Fig. 1A.

Fuel filter end cap 8 is provided on either end of a fuel filter element 10. The end cap 8 and element 10 are each shaped to suit the dimensions of the fuel filter housing (not shown) in which it is intended to be installed. The end cap 8 has a closure 12 covering an aperture which is capable of accepting a suitable connecting portion (not shown) of a fuel filter housing. A number of flaps 14 project toward the centre of the aperture to form narrow slits which themselves form a six pronged star shape. During manufacture of the fuel filter element, the flaps 14 may be formed by cutting suitable slits in the end cap 8 material. A number of suitable materials, such as rubber, plastic etc. may be used for the end cap 10.

In use, when the fuel filter element 10 is initially installed in a fuel filter housing, connecting portions of the fuel filter housing are pushed into the aperture of the closure 12 at either end of the fuel filter element. As the connecting portions are inserted the flaps 14 fold in toward the centre of the fuel filter element. As this happens, the resilient nature of the flaps 14 causes them to create a fuel tight seal around the connecting portion of the fuel filter housing. Whilst the fuel filter element is in the operational position, the flaps 14 will remains in this open position.

When it is necessary to remove the fuel filter for replacement / servicing the connecting portions of the fuel filter housing are removed from either end of the fuel filter element. As this happens, the flaps 14 fold out toward the initial starting position shown in Fig. 1B. In so doing, the flaps 14 effectively close the aperture of the closure 12 in order to minimise the likelihood of contaminating particles entering the fuel filter element 10.

Modifications and improvement may be made to the foregoing, without departing from the scope of the invention, for example:-
Although a circular aperture and corresponding star shaped arrangement of the diaphragm is described, another suitable shape, such as a polygon, triangle etc could be used for the aperture.
It would also be possible to manipulate the number of flaps and hence the number of prongs on the star shape in order to suit the desired application.

## Claims

1. A fuel filter element (10) with an end cap (8), the end cap (8) comprising:-
an aperture for connecting the fuel filter to a connecting portion of a fuel filter housing; and
a closure (12) actuable between a closed position, in which the aperture is substantially blocked, and an open position, in which the aperture is substantially open, wherein the closure (12) is actuable from the closed position to the open position by insertion of the connection portion into the aperture and from the open position to the closed position by removal of the connecting portion from the aperture.

2. A fuel filter element according to claim 1, wherein the closure (12) comprises at least a flap (14).

3. A fuel filter element according to claim 1, wherein the closure (12) comprises a plurality of flaps (14) arranged around the aperture.

4. A fuel filter element according to any preceding claim, wherein the or each flap (14) is connected to the end cap (8) by way of a resilient hinge.

5. A fuel filter element according to any preceding claim, wherein the aperture is substantially circular.

6. A fuel filter element according to any of claims 3 to 5, wherein each flap (14) is triangular and forms a series of narrow slits defining a star shape when the closure is in the closed position.

7. A fuel filter element according to claim 6, wherein the narrow slits define a six pronged star.

8. A fuel filter element according to any preceding claim, wherein the or each flap (14) forms a fluid tight seal around the connecting portion of the fuel filter housing when the connecting portion of the fuel filter housing is inserted into the aperture.

9. A fuel filter element according to any preceding claim, wherein the fuel filter end cap (8) and the or each flap (14) comprises a single integrated section of material and wherein the fuel filter end cap is provided on either end of a fuel filter element (10).

10. A fuel filter element according to any preceding claim, wherein the or each flap (14) comprises resilient material such as rubber.

## Patentansprüche

1. Kraftstofffilterelement (10) mit einer Endkappe (8), wobei die Endkappe (8) umfasst:
eine Öffnung zum Verbinden des Kraftstofffilters mit einem Verbindungsabschnitt eines Kraftstofffiltergehäuses; und
einen Verschluss (12), der zwischen einer geschlossenen Position, in der die Öffnung im Wesentlichen versperrt ist, und einer offenen Position, in der die Öffnung im Wesentlichen offen ist, betätigbar ist, wobei der Verschluss (12) aus der geschlossenen Position in die offene Position durch Einsetzen des Verbindungsabschnitts in die Öffnung und aus der offenen Position in die geschlossene Position durch Entfernen des Verbindungsabschnitts aus der Öffnung betätigbar ist.

2. Kraftstofffilterelement nach Anspruch 1, wobei der Verschluss (12) mindestens eine Klappe (14) umfasst.

3. Kraftstofffilterelement nach Anspruch 1, wobei der Verschluss (12) mehrere Klappen (14) umfasst, die um die Öffnung herum angeordnet sind.

4. Kraftstofffilterelement nach einem der vorhergehenden Ansprüche, wobei die oder jede Klappe (14) mit der Endkappe (8) mittels eines elastischen Scharniers verbunden ist.

5. Kraftstofffilterelement nach einem der vorhergehenden Ansprüche, wobei die Öffnung im Wesentlichen kreisförmig ist.

6. Kraftstofffilterelement nach einem der Ansprüche 3 bis 5, wobei jede Klappe (14) dreieckig ist und eine Reihe von schmalen Schlitzen bilden, die eine Sternform definieren, wenn sich der Verschluss in der geschlossenen Position befindet.

7. Kraftstofffilterelement nach Anspruch 6, wobei die schmalen Schlitze einen sechseckigen Stern definieren.

8. Kraftstofffilterelement nach einem der vorhergehenden Ansprüche, wobei die oder jede Klappe (14) eine fluiddichte Dichtung um den Verbindungsabschnitt des Kraftstofffiltergehäuses herum bildet, wenn der Verbindungsabschnitt des Kraftstofffiltergehäuses in die Öffnung eingesetzt ist.

9. Kraftstofffilterelement nach einem der vorhergehenden Ansprüche, wobei die Kraftstofffilterendkappe (8) und die oder jede Klappe (14) einen einzigen integrierten Materialabschnitt umfasst/umfassen, und wobei die Kraftstofffilterendkappe an beiden Enden eines Kraftstofffilterelements (10) vorgesehen ist.

10. Kraftstofffilterelement nach einem der vorhergehenden Ansprüche, wobei die oder jede Klappe (14) elastisches Material, wie etwa Gummi, umfasst.

## Revendications

1. Élément de filtre à carburant (10) comprenant un capuchon d'extrémité (8), le capuchon d'extrémité (8) comprenant :
une ouverture pour raccorder le filtre à carburant à une portion de raccordement d'un boîtier de filtre à carburant ; et
une fermeture (12) susceptible d'être actionnée entre une position fermée dans laquelle l'ouverture est sensiblement bloquée, et une position ouverte dans laquelle l'ouverture est sensiblement ouverte, ladite fermeture (12) pouvant être actionnée de la position fermée à la position ouverte par insertion de la portion de raccordement dans l'ouverture, et de la position ouverte à la position fermée par enlèvement de la portion de raccordement hors de l'ouverture.

2. Élément de filtre à carburant selon la revendication 1, dans lequel la fermeture (12) comprend au moins un volet (14).

3. Élément de filtre à carburant selon la revendication 1, dans lequel la fermeture (12) comprend une pluralité de volets (14) agencés autour de l'ouverture.

4. Élément de filtre à carburant selon l'une quelconque des revendications précédentes, dans lequel le volet ou chaque volet (14) est raccordé au capuchon d'extrémité (8) au moyen d'une articulation élastique.

5. Élément de filtre à carburant selon l'une quelconque des revendications précédentes, dans lequel l'ouverture est sensiblement circulaire.

6. Élément de filtre à carburant selon l'une quelconque des revendications 3 à 5, dans lequel chaque volet (14) est triangulaire et forme une série de fentes étroites définissant une forme en étoile quand la fermeture est dans la position fermée.

7. Élément de filtre à carburant selon la revendication 6, dans lequel les fentes étroites définissent une étoile à six branches.

8. Élément de filtre à carburant selon l'une quelconque des revendications précédentes, dans lequel le volet ou chaque volet (14) forme un joint étanche aux fluides autour de la portion de raccordement du boîtier de filtre à carburant quand la portion de raccordement du boîtier de filtre à carburant est insérée dans l'ouverture.

9. Élément de filtre à carburant selon l'une quelconque des revendications précédentes, dans lequel le capuchon d'extrémité (8) du filtre à carburant et le volet ou chaque volet (14) comprend un tronçon intégré unique de matériau, et dans lequel le capuchon d'extrémité du filtre à carburant est prévu sur chaque extrémité d'un élément de filtre à carburant (10).

10. Élément de filtre à carburant selon l'une quelconque des revendications précédentes, dans lequel le volet ou chaque volet (14) comprend un matériau élastique, comme du caoutchouc.
